# EUROPÄISCHE PATENTANMELDUNG

(11) **EP 3 854 829 A1**
(43) Veröffentlichungstag der Anmeldung: **28.07.2021**
(21) Anmeldenummer: 21157414.0
(22) Anmeldetag: 21.12.2017
(51) Int. Cl.: C08G 8/24, C08G 18/54, C08G 18/76, B22C 1/22, B22C 1/16

(54) **PHENOLHARZ ZUR VERWENDUNG IN DER PHENOLHARZKOMPONENTE EINES ZWEIKOMPONENTEN-BINDEMITTELSYSTEMS**

(30) Priorität: 23.12.2016 DE 102016125624
(62) Teilanmeldung aus: 17832070.1
(71) Anmelder: HÜTTENES-ALBERTUS Chemische Werke Gesellschaft mit beschränkter Haftung, 40549 Düsseldorf (DE)
(72) Erfinder: Ladégourdie, Gérard, 40237 Düsseldorf (DE); Nitsch, Ursula, 56154 Boppard (DE); Jenrich, Klaus, 58675 Hemer (DE)
(74) Vertreter: Eisenführ Speiser

(57) **Zusammenfassung**

Die vorliegende Erfindung betrifft ein Phenolharz zur Verwendung in der Phenolharzkomponente eines Zweikomponenten-Bindemittelsystems für den Polyurethan-Cold-Box-Prozess, ein Zweikomponenten-Bindemittelsystem zur Verwendung im Polyurethan-Cold-Box-Prozess, eine Formstoffmischung zur Härtung durch Kontaktieren mit einem tertiären Amin, die Verwendung eines entsprechenden Phenolharzes, einer entsprechenden Phenol-Komponente, eines entsprechenden Zweikomponenten-Bindemittelsystems oder einer entsprechenden Formstoffmischung. Die vorliegende Erfindung betrifft zudem einen Artikel aus der Gruppe bestehend aus Speisern, Gießereiformen und Gießereikernen, herstellbar aus einer entsprechenden Formstoffmischung, ein Verfahren zur Herstellung eines Phenolharzes und ein Verfahren zur Herstellung eines Artikels aus der Gruppe bestehend aus Speisern, Gießereiformen und Gießereikernen.

## Beschreibung

Die vorliegende Erfindung betrifft ein Phenolharz zur Verwendung in der Phenolharzkomponente eines Zweikomponenten-Bindemittelsystems für den Polyurethan-Cold-Box-Prozess, ein Zweikomponenten-Bindemittelsystem zur Verwendung im Polyurethan-Cold-Box-Prozess, eine Formstoffmischung zur Härtung durch Kontaktieren mit einem tertiären Amin, die Verwendung eines entsprechenden Phenolharzes, einer entsprechenden Phenol-Komponente, eines entsprechenden Zweikomponenten-Bindemittelsystems oder einer entsprechenden Formstoffmischung. Die vorliegende Erfindung betrifft zudem einen Artikel aus der Gruppe bestehend aus Speisern, Gießereiformen und Gießereikernen, herstellbar aus einer entsprechenden Formstoffmischung, ein Verfahren zur Herstellung eines Phenolharzes und ein Verfahren zur Herstellung eines Artikels aus der Gruppe bestehend aus Speisern, Gießereiformen und Gießereikernen.

Bei der Herstellung von Speisern, Gießereiformen und Gießereikernen werden zur Bindung des Formgrundstoffs häufig unter Polyurethanbildung kalthärtende Zweikomponenten-Bindemittelsysteme eingesetzt. Diese Bindemittelsysteme bestehen aus zwei Komponenten, einem in einem Lösungsmittel gelösten Phenolharz mit mindestens zwei OH-Gruppen im Molekül (Phenolharzkomponente) und einem in einem Lösungsmittel gelösten oder lösungsmittelfreien Isocyanat mit mindestens zwei Isocyanat-Gruppen im Molekül (Isocyanatkomponente). Die beiden Komponenten, die der einen Formgrundstoff enthaltenden Formstoffmischung getrennt zugesetzt werden, reagieren in der geformten Formstoffmischung in einer Additionsreaktion zu einem gehärteten Polyurethan-Bindemittel. Die Härtung erfolgt dabei in Gegenwart basischer Katalysatoren, bevorzugt in Form tertiärer Amine, die nach der Formung der Formstoffmischung mit einem Trägergas in das Formwerkzeug eingeführt werden.

Die Phenolharzkomponente ist ein in einem Lösungsmittel gelöstes Phenolharz, d.h. ein Kondensationsprodukt eines oder mehrerer (gegebenenfalls substituierter) Phenole mit einem oder mehreren Aldehyden (insbesondere Formaldehyd). Aufgrund der hohen Viskosität von Phenolharzen ist es erforderlich, dass die Pheonolharze der Phenolharzkomponente in einem Lösungsmittel gelöst werden, da andernfalls eine Weiterverarbeitung nicht möglich ist. Insbesondere wäre eine homogene Durchmischung der Phenolharzkomponente mit der Isocyanatkomponente und dem Formgrundstoff nicht oder nicht ohne erheblichen Mehraufwand möglich. Zudem wird durch das Lösen des Phenolharzes die Reaktionsfähigkeit mit der Isocyanatkomponente herabgesetzt, sodass die Reaktion nicht vor der Zugabe des Katalysators beginnt. Entsprechend liegt die Phenolharzkomponente üblicherweise in Form einer Lösung mit einer Konzentration an Phenolharz im Bereich von 40 % bis 60 % vor, bezogen auf die Gesamtmasse der Phenolharzkomponente.

Als Isocyanatkomponente wird ein Isocyanat (meist Polyisocyanat) mit mindestens zwei Isocyanat-Gruppen im Molekül in ungelöster Form oder gelöst in einem Lösungsmittel eingesetzt. Bevorzugt sind aromatische Isocyanate (meist Polyisocyanate). Im Falle einer Isocyanatkomponente in Form einer Lösung liegt die Konzentration des Isocyanats im Allgemeinen oberhalb von 70 %, bezogen auf die Gesamtmasse der Isocyanatkomponente.

Zur Herstellung von Speisern, Gießereikernen und Gießereiformen nach dem Polyurethan-Cold-Box-Prozess (auch als "Urethan-Cold-Box-Verfahren bezeichnet) wird zunächst eine Formstoffmischung hergestellt, indem ein körniger Formgrundstoff mit den beiden Komponenten des oben beschriebenen Zweikomponenten-Bindemittelsystems vermischt wird. Dabei werden die Mengenverhältnisse der beiden Komponenten des Zweikomponenten-Bindemittelsystems vorzugsweise so bemessen, dass sich bezogen auf die Anzahl der OH-Gruppen ein nahezu stöchiometrisches Verhältnis oder ein Überschuss der NCO-Gruppen ergibt. Derzeit übliche Zweikomponenten-Bindemittelsysteme weisen typischerweise einen Überschuss an NCO-Gruppen von bis zu 20 % auf, bezogen auf die Anzahl der OH-Gruppen. Die Gesamtmenge an Bindemittel (einschließlich der in den Bindemittelkomponenten vorhandenen Lösungsmittel und Additive) liegt bei Gießereikernen und Gießereiformen üblicherweise im Bereich von ca. 1 % bis 2 % bezogen auf die eingesetzte Masse an Formgrundstoff, sowie bei Speisern üblicherweise im Bereich von ca. 5 % bis 18 % bezogen auf die sonstigen Bestandteile der Speisermasse.

Die Formstoffmischung wird sodann geformt. Danach erfolgt unter kurzzeitiger Begasung mit einem tertiären Amin als Katalysator die Härtung der geformten Formstoffmischung. Die benötigte Menge an Katalysator in Form von tertiärem Amin liegt im Bereich von 0,035 % bis 0,11 %, jeweils bezogen auf die eingesetzte Masse an Formgrundstoff. Bezogen auf die Masse an Bindemittel beträgt die benötigte Menge an Katalysator in Form von tertiärem Amin typischerweise 3 % bis 15 %, je nach Art des eingesetzten tertiären Amins. Anschließend kann der Speiser, der Gießereikern bzw. die Gießereiform dem Formwerkzeug entnommen und zum Gießen von Metall verwendet werden, beispielsweise im Motorenguss.

Unter Polyurethanbildung kalthärtende Zweikomponenten-Bindemittelsysteme wie oben beschrieben werden auch im Polyurethan-No-Bake-Verfahren eingesetzt. Hier erfolgt die Härtung unter Einwirkung eines flüssigen Katalysators in Form einer Lösung eines tertiären Amins, das der Formstoffmischung zugesetzt wird.

In der WO 2016/165916 A1 wird eine Phenolharz-Komposition zur Verwendung im Polyurethan-Cold-Box- und/oder No-Bake-Verfahren beschrieben. Die beschriebene Phenolharz-Komposition umfasst ein ortho kondensiertes phenolisches Resol mit veretherten und/oder freien Methylolgruppen, freies Formaldehyd, ein oder mehrere Reaktionsprodukte von Formaldehyd mit einer oder mehreren C-H-aciden Eduktverbindungen und sonstige Bestandteile. Ein in diesem Dokument beschriebenes orthokondensiertes phenolisches Resol weist die nachfolgend wiedergegebene Formel auf, wobei das Resol durch Kondensation eines einzigen Phenols erhalten wird, sodass sämtliche Reste R gleich sind. R entspricht in der oben wiedergegebenen Formel Wasserstoff oder einem Substituenten in meta- oder para-Stellung zur phenolischen Hydroxy-Gruppe.

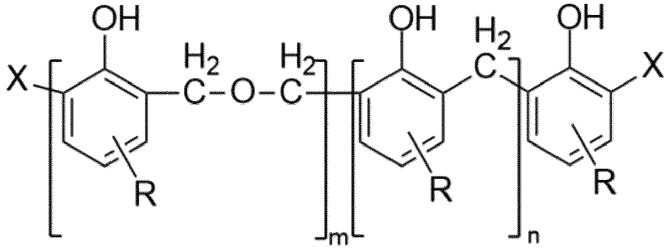

Zweikomponenten-Bindemittelsystem zur Verwendung im Polyurethan-Cold-Box-Prozess werden beispielsweise beschrieben in US 3,409,579, US 4,546,124, DE 10 2004 057 671, EP 0 771 599, EP 1 057 554 und DE 10 2010 051 567.

Bei der Auswahl der Lösungsmittel für die Phenolharz- und ggf. für die Isocyanat-Komponente ist zu beachten, dass die Lösungsmittel zwar nicht in relevanter Weise an der Reaktion zwischen dem Isocyanat und dem Phenolharz in Gegenwart eines Katalysators teilnehmen, diese Reaktion aber sehr wohl beeinflussen können. Ein Problem stellt insbesondere der Umstand dar, dass die beiden Bindemittel-Komponenten Phenolharz und Isocyanat eine deutlich unterschiedliche Polarität besitzen. Diese Polaritätsdifferenz zwischen dem Isocyanat und dem Phenolharz beschränkt die Anzahl einsetzbarer Lösungsmittel auf diejenigen, die mit beiden Bindemittel-Komponenten kompatibel sind. Eine solche Kompatibilität ist notwendig, um eine vollständige Umsetzung und Aushärtung eines Bindemittelsystems zu erreichen. Polare Lösungsmittel des protischen oder aprotischen Typs sind regelmäßig zwar gute Lösungsmittel für das Phenolharz, sind für das Isocyanat jedoch nur wenig geeignet. Aromatische Lösungsmittel wiederum sind zwar mit Isocyanaten kompatibel, sind jedoch für Phenolharze nur wenig geeignet. Darüberhinaus haben aromatische Lösungsmittel den Nachteil, nach dem Abguss schädliche Substanzen wie Benzol, Xylol oder Toluol freizusetzen.

Üblicherweise werden in der Praxis daher Gemische von polaren und unpolaren, aromatenhaltigen Lösungsmitteln eingesetzt, die auf das jeweilige Bindemittelsystem (Phenolharz und Isocyanat) abgestimmt sind. Die einzelnen Bestandteile des Lösungsmittelgemisches sollen dabei im Übrigen keinen zu niedrigen Siedebereich haben, damit das Lösungsmittel, insbesondere wenn mit warmen Sand gearbeitet wird, zu rasch verfliegt und dadurch Fließfähigkeit und Verdichtbarkeit des Sandes herabgesetzt werden.

Als unpolare, aromatenhaltige Lösungsmittel werden bisher bevorzugt Gemische von hochsiedenden aromatischen Kohlenwasserstoffen eingesetzt, d.h. Gemische aromatischer Kohlenwasserstoffe mit einem Siedebereich oberhalb von etwa 150 °C bei Normaldruck. Als polare Lösungsmittel sind u.a. bestimmte ausreichend hochsiedende Ester zum Einsatz gekommen, wie z.B. Mischungen aus Dimethyladipat, -succinat und -glutarat, die im Handel auch als DBE (Dibasic Ester) bekannt sind.

Aus ökonomischen und ökologischen Gründen ist es vorteilhaft, die in Gießereien anfallenden Emissionen durch organische Lösungsmittel zu vermeiden oder zu vermindern. Die Emissionen beim Abguss, aber auch Ausdunstungen und Ausgasungen vor dem Abguss stellen eine erhebliche Arbeitsplatzbelastung dar, die zumeist nicht durch Schutzmaßnahmen wie Abzugshauben oder dergleichen abgefangen werden kann.

In der DE 1 999 125 115 A1 wird die Verwendung von Alkylsilikaten vorgeschlagen. Hierdurch ist es insbesondere möglich, schädliche Emissionen nach dem Abguss erheblich zu reduzieren. Aufgrund der geringen Polarität von Alkylsilikaten war es allerdings bisher nicht möglich, vollständig auf die Zugabe von polaren, organischen Lösungsmitteln zu verzichten, da die bisher verwendeten Phenolharze keine ausreichende Mischbarkeit mit Alkylsilikaten aufweisen.

Es ist daher die Aufgabe der vorliegenden Erfindung ein Phenolharz zur Verwendung in der Phenolharzkomponente eines Zweikomponenten-Bindemittelsystems für den Polyurethan-Cold-Box-Prozess anzugeben, das eine verbesserte Mischbarkeit bzw. Löslichkeit mit unpolaren Lösungsmitteln, insbesondere Alkylsilikaten, aufweist, wobei die sonstigen Eigenschaften des Phenolharzes, des daraus hergestellten Zweikomponenten-Bindemittelsystems oder der aus dem Zweikomponenten-Bindemittelsystem hergestellten Formstoffmischung oder Artikel nicht negativ beeinflusst werden.

Diese Aufgabe wird gelöst durch ein Phenolharz zur Verwendung in der Phenolharzkomponente eines Zweikomponenten-Bindemittelsystems für den Polyurethan-Cold-Box-Prozess, wobei das Phenolharz umfasst:
(a) ein Resol mit den folgenden strukturellen Einheiten: 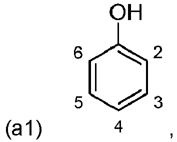 wobei an einer, zwei oder drei der Positionen 2, 4 und 6 anstatt einer Bindung zu Wasserstoff eine Bindung an eine weitere strukturelle Einheit des Resols vorliegt,
(a2) eine oder mehrere strukturelle Einheiten der Formel (A2) 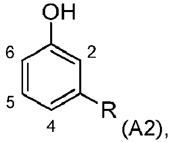 wobei der Substituent R ein (a2-i) substituierter oder unsubstituierter, (a2-ii) aliphatischer, (a2-iii) verzweigter oder unverzweigter, (a2-iv) gesättigter oder ungesättigter Rest mit insgesamt 1 bis 35 C-Atomen, einschließlich etwaiger Substituenten, ist und
   wobei an einer, zwei oder drei der Positionen 2, 4 und 6 anstatt einer Bindung zu Wasserstoff eine Bindung an eine weitere strukturelle Einheit des Resols vorliegt,
(a3) eine oder mehrere strukturelle Einheiten der Formel (A3) 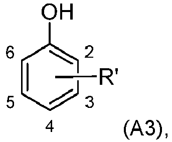 wobei der Substituent R' an der Position 2 oder 4 substituiert ist und ein (a3-i) substituierter oder unsubstituierter, (a3-ii) aliphatischer, (a3-iii) verzweigter oder unverzweigter, (a3-iv) gesättigter oder ungesättigter Rest mit insgesamt 1 bis 15 C-Atomen, einschließlich etwaiger Substituenten, ist und
   wobei an einer, zwei oder drei der verbleibenden Positionen 2,4 und 6 anstatt einer Bindung zu Wasserstoff eine Bindung an eine weitere strukturelle Einheit des Resols vorliegt, 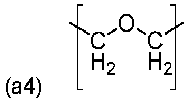 als zwei Phenolkerne verbindendes Glied, 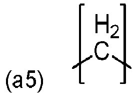 als zwei Phenolkerne verbindendes Glied.

Es hat sich überraschenderweise gezeigt, dass erfindungsgemäße Phenolharze eine sehr hohe Mischbarkeit bzw. Löslichkeit in unpolaren Lösungsmitteln aufweisen. Bei der Verwendung der erfindungsgemäßen Phenolharze in der Phenolharzkomponente eines Zweikomponenten-Bindemittelsystems für den Polyurethan-Cold-Box-Prozess ist es nun möglich, vollständig auf organische, polare Lösungsmittel zu verzichten. Die erfindungsgemäßen Phenolharze sind in den für die Herstellung von Phenolharz-Komponenten von Zweikomponenten-Bindemittelsystemem für den Polyurethan-Cold-Box-Prozess benötigten Mischungen sehr gut mit Alkylsilikaten, wie Tetraetylsilikat mischbar, ohne dass eine Trübung der Lösung zu beobachten ist.

Durch die Verwendung von erfindungsgemäßen Phenolharzen ist es daher möglich die Emission an aromatischen Lösungsmitteln zu reduzieren oder auszuschließen.

Zudem ist es überraschenderweise möglich unpolare Lösungsmittel zum Lösen des Phenolharzes zu verwenden, die gleichzeitig auch gute Lösungsmittel für Isocyanate (insbesondere Polyisocyanate) darstellen. Somit kann auf die Verwendung von Lösungsmittelgemischen aus polaren und unpolaren Lösungsmitteln verzichtet werden.

Erfindungsgemäß bevorzugt ist ein Phenolharz, wobei in dem Resol des Bestandteils (a) das molare Verhältnis der strukturellen Einheiten
a1 zu a2 im Bereich von 10 : 1 bis 99 : 1, bevorzugt von 15 : 1 bis 50 : 1, liegt,
und/oder
a1 zu a3 im Bereich von 1 : 1 bis 10 : 1 liegt, vorzugsweise im Bereich 1,5 : 1 bis 3,5 : 1 liegt
und/oder
a2 zu a3 im Bereich von 5 : 1 bis 30 : 1, vorzugsweise von 10:1 bis 20:1 liegt
und/oder
a4 zu a5 im Bereich von 90 : 10 bis 10 : 90 liegt.

Weiter bevorzugt ist ein erfindungsgemäßes Phenolharz, wobei der Anteil des Resols des Bestandteils (a) im Bereich von 30 bis 75 Gew.-% liegt, bezogen auf die Gesamtmasse des Phenolharzes. Beispielsweise können in dem erfindungsgemäßen Phenolharz weitere Resole oder Novolac neben dem erfindungsgemäßen Resol vorliegen oder das erfindungsgemäße Phenolharz enthält einen Anteil an freien Monomeren.

Ebenfalls bevorzugt ist ein erfindungsgemäßes Phenolharz, weiter umfassend
(b) einen Anteil an freien aromatischen Monomeren, vorzugsweise einen Anteil im Bereich von 0 bis 20 Gew.-%, vorzugsweise 0 bis 10 Gew.-% und besonders bevorzugt 0 bis 1,9 Gew.-% bezogen auf die Gesamtmasse des Phenolharzes
   und/oder
(c) einen Anteil an Formaldehyd, vorzugsweise einen Anteil im Bereich von 0 bis 1,0 Gew.-%, bevorzugt 0,0 bis 0,2 Gew.-%, besonders bevorzugt 0,0 bis 0,02 Gew.-% bezogen auf die Gesamtmasse des Phenolharzes
   und/oder
(d) einen Anteil eines weiteren Resols oder Novolacs, vorzugsweise einen Anteil im Bereich zwischen 0 und 50 Gew.-% bezogen auf die Gesamtmasse des Phenolharzes.

Ebenfalls erfindungsgemäß bevorzugt ist ein Phenolharz, wobei der Substituent R der strukturellen Einheiten der Formel (A2) ein Rest mit 5 bis 15 C-Atomen ist.

Erfindungsgemäß bevorzugt ist ein Phenolharz,
wobei in der einen oder zumindest in einer der strukturellen Einheiten der Formel (A2) der Substituent R ein (a2-i) unsubstituierter, (a2-ii) aliphatischer, (a2-iii) unverzweigter Rest mit insgesamt 1 bis 35 C-Atomen ist, vorzugsweise mit insgesamt 5 bis 15 C-Atomen,
und/oder
wobei in der einen oder zumindest in einer der strukturellen Einheiten der Formel (A2) der Substituent R (a2-iv) ein- oder mehrfach ungesättigt ist, bevorzugt ein-, zwei- oder dreifach ungesättigt.

Hierbei ist ein erfindungsgemäßes Phenolharz bevorzugt, wobei in der einen oder zumindest in einer der strukturellen Einheiten der Formel (A2) der Substituent R ein (a2-i) unsubstituierter, (a2-ii) aliphatischer, (a2-iii) unverzweigter Rest mit insgesamt 15 C-Atomen ist, der (a2-iv) dreifach ungesättigt ist, wobei Doppelbindungen vorzugsweise in den Positionen 8, 11 und 14 angeordnet sind.

Es ist erfindungsgemäß besonders bevorzugt, wenn die strukturellen Einheiten der Formel (A2) eine oder mehrere strukturelle Einheiten der Formel (A2-A) ist: 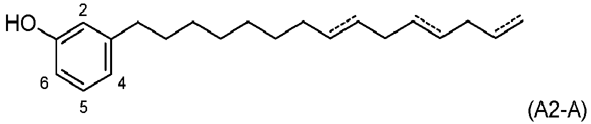 wobei eine, zwei, oder sämtliche der gestrichelt dargestellten Bindungen eine Doppelbindung darstellt.

Es ist erfindungsgemäß weiter bevorzugt, wenn in einem erfindungsgemäßen Resol die strukturelle Einheit (a2) aus verschiedenen strukturellen Einheiten der Formel (A2-A) besteht, wobei eine, zwei, oder sämtliche der gestrichelt dargestellten Bindungen eine Doppelbindung darstellt.

Es ist erfindungsgemäß besonders bevorzugt, wenn eine oder die eine strukturelle Einheiten der Formel (A2) eine strukturelle Einheit der Formel (A2-B) ist:

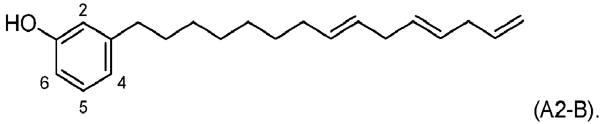

Diese bevorzugten erfindungsgemäßen Phenole zeichnen sich durch eine besonders gute Löslichkeit in unpolaren Lösungsmitteln aus. Überraschenderweise zeigen die Lösungen eine besonders geringe Viskosität auch bei nur geringen Zusatz an Lösungsmittel auf.

Ebenfalls erfindungsgemäß bevorzugt ist ein Phenolharz, wobei der Substituent R' der strukturellen Einheiten der Formel (A3) ein Rest mit 1 bis 9 C-Atomen ist.

Erfindungsgemäß bevorzugt ist ein Phenolharz,
wobei in der einen oder zumindest in einer der strukturellen Einheiten der Formel (A3) der Substituent R' in ortho-Position zum phenolischen OH angeordnet ist
und/oder
wobei in der einen oder zumindest in einer der strukturellen Einheiten der Formel (A3) der Substituent R' ein (a3-i) unsubstituierter, (a3-iii) verzweigter oder unverzweigter, (a3-iv) gesättigter Alkylrest ist, mit vorzugsweise 1 bis 9 C-Atomen, bevorzugt mit 1, 4, 8 oder 9 C-Atomen.

Erfindungsgemäß bevorzugt ist ein Phenolharz, wobei in der einen oder zumindest in einer der strukturellen Einheiten der Formel (A3) der Substituent R' in ortho-Position zum phenolischen OH angeordnet ist und der Substituent R' eine Methyl-Gruppe darstellt.

Erfindungsgemäß ganz besonders bevorzugt ist ein Phenolharz zur Verwendung in der Phenolharzkomponente eines Zweikomponenten-Bindemittelsystems für den Polyurethan-Cold-Box-Prozess, wobei das Phenolharz umfasst:
(a) ein Resol mit den folgenden strukturellen Einheiten: 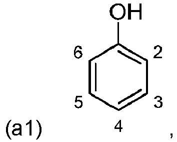 wobei an einer, zwei oder drei der Positionen 2, 4 und 6 anstatt einer Bindung zu Wasserstoff eine Bindung an eine weitere strukturelle Einheit des Resols vorliegt,
(a2) eine oder mehrere strukturelle Einheiten der Formel (A2-A) 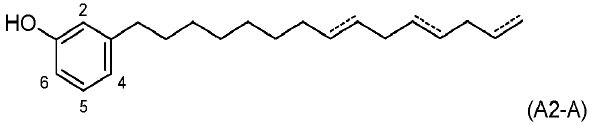 wobei eine, zwei, oder sämtliche der gestrichelt dargestellten Bindungen eine Doppelbindung darstellt und wobei an einer, zwei oder drei der Positionen 2, 4 und 6 anstatt einer Bindung zu Wasserstoff eine Bindung an eine weitere strukturelle Einheit des Resols vorliegt,
(a3) eine oder mehrere strukturelle Einheiten der Formel (A3-A) 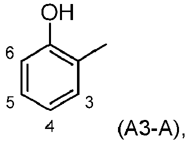 wobei an einer, zwei oder drei der verbleibenden Positionen 2,4 und 6 anstatt einer Bindung zu Wasserstoff eine Bindung an eine weitere strukturelle Einheit des Resols vorliegt, 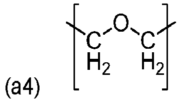 als zwei Phenolkerne verbindendes Glied, 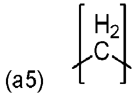 als zwei Phenolkerne verbindendes Glied.

Erfindungsgemäß ganz besonders bevorzugt ist ein Phenolharz zur Verwendung in der Phenolharzkomponente eines Zweikomponenten-Bindemittelsystems für den Polyurethan-Cold-Box-Prozess, wobei das Phenolharz umfasst:
(a) ein Resol hergestellt durch die Polykondensation von: 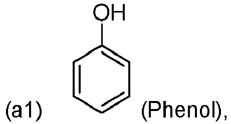
(a2) einer oder mehrerer Verbindungen der Formel (I) 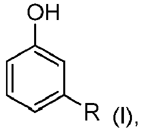 wobei der Substituent R ein (a2-i) substituierter oder unsubstituierter, (a2-ii) aliphatischer, (a2-iii) verzweigter oder unverzweigter, (a2-iv) gesättigter oder ungesättigter Rest mit insgesamt 1 bis 35 C-Atomen, einschließlich etwaiger Substituenten, ist und
(a3) eine oder mehrerer Verbindungen der Formel (II) 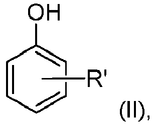 wobei der Substituent R' an der Position 2 oder 4 substituiert ist und ein (a3-i) substituierter oder unsubstituierter, (a3-ii) aliphatischer, (a3-iii) verzweigter oder unverzweigter, (a3-iv) gesättigter oder ungesättigter Rest mit insgesamt 1 bis 15 C-Atomen, einschließlich etwaiger Substituenten, ist und
und Formaldehyd.

Erfindungsgemäß bevorzugt erfolgt die Polykondensation der Phenole mit Formaldehyd in schwach saurem Medium unter Verwendung geeigneter Metallkatalysatoren. Geeignete Metallkatalysatoren sind Salze zweiwertiger Ionen von Metallen wie Mn, Zn, Cd, Mg, Co, Ni, Fe, Pb, Ca und Ba. Bevorzugt wird Zinkacetat, das üblicherweise als Zinkacetatdihydrat eingesetzt wird, verwendet. Die eingesetzte Menge ist nicht kritisch. Typische Mengen an Zinkacetatdihydrat betragen 0,02 bis 0,3 Gew.-%, bevorzugt 0,02 bis 0,2 Gew.-%, bezogen auf die Gesamtmenge an Phenolen und Formaldehyd.

Die weiter oben als bevorzugt gekennzeichneten Ausgestaltungen der Reste R und R' der strukturellen Einheiten der Formeln (A2) und (A3) gelten für die Verbindungen (I) und (II) entsprechend.

Besonders bevorzugt handelt es sich bei der Verbindung der Formel (I) um eine Verbindung der Formel (I-A) 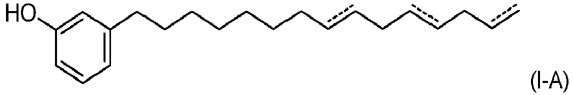 wobei eine, zwei, oder sämtliche der gestrichelt dargestellten Bindungen eine Doppelbindung darstellt.

Ganz besonders bevorzugt handelt es sich bei der Verbindung der Formel (I) um eine Verbindung der Formel (I-B)

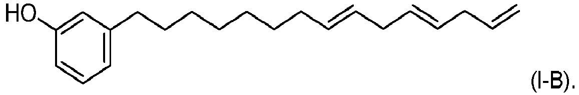

Ganz besonders bevorzugt handelt es sich bei der Verbindung der Formel (I) um Cardanol.

Besonders bevorzugt handelt es sich bei der Verbindung der Formel (II) um eine Verbindung der Formel (II-A) 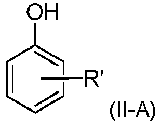 wobei in der einen oder zumindest in einer der strukturellen Einheiten der Formel (II-A) der Substituent R' in ortho-Position zum phenolischen OH angeordnet ist
und/oder
wobei in der einen oder zumindest in einer der strukturellen Einheiten der Formel (II-A) der Substituent R' ein (a3-i) unsubstituierter, (a3-iii) verzweigter oder unverzweigter, (a3-iv) gesättigter Alkylrest ist, mit vorzugsweise 1 bis 9 C-Atomen, bevorzugt mit 1, 4, 8 oder 9 C-Atomen.

Ganz besonders bevorzugt handelt es sich bei der Verbindung der Formel (II) um ortho-Kresol.

Klarstellend sei mit Blick auf die Offenbarung des Dokuments WO2016/165916 A1 darauf hingewiesen, dass Verbindungen der nachfolgend abgebildeten Formel 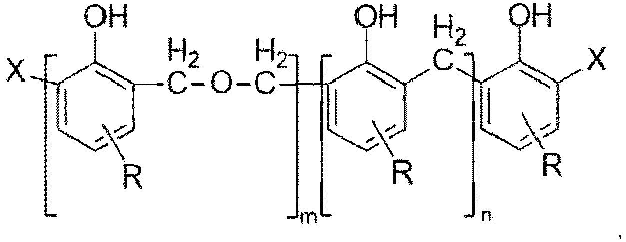 wobei einheitlich jedes R Wasserstoff oder ein Substituent in meta- oder para-Stellung zur phenolischen Hydroxy-Gruppe ist, wie beispielsweise Methyl, *n*-Butyl, *i*-Butyl, *tert-*Butyl, Octyl, Nonyl, Pentadecenyl, Pentadecadienyl und Pentadecatrienyl, und die Summen von m und n mindestens 2 beträgt und das Verhältnis m/n mindestens 1 ist und X Wasserstoff, CH₂OH oder eine veretherte Methylolgruppe ist, nicht erfindungsgemäß sind.

Ein weiterer Aspekt der vorliegenden Erfindung betrifft eine Phenolharz-Komponente zur Verwendung als Komponente eines Zweikomponenten-Bindemittelsystems für den Polyurethan-Cold-Box-Prozess, umfassend
- ein erfindungsgemäßes Phenolharz
   sowie
- ein Lösungsmittel für das Phenolharz.

Erfindungsgemäß bevorzugt ist eine Phenolharz-Komponente, wobei das Lösungsmittel ausgewählt ist aus der Gruppe bestehend aus Alkylsilikaten, Alkylsilikat-Oligomeren, Alkylsilikat-Polymeren, C10-C13-Alkylbenzolen, iso-Paraffinen, aromatischen Kohlenwasserstoffen, aliphatischen Kohlenwasserstoffen und Mischungen umfassend zumindest eine dieser Verbindungen,
und/oder
wobei das Lösungsmittel so gewählt ist, dass das Phenolharz bei 25 °C mit dem Lösungsmittel in einem Gewichtsverhältnis zwischen Phenolharz und Lösungsmittel von 7 zu 3 bis 3 zu 7, vorzugsweise 6 : 4 bis 4 : 6, besonders bevorzugt 5,5 : 4,5 bis 4,5 : 5,5 mischbar ist und eine homogene Lösung ausbildet.

Nachfolgend sind - beginnend mit den bevorzugten Tetraethyl(ortho)silikat - eine Reihe besonders bevorzugter Alkylsilikaten, Alkylsilikat-Oligomeren, Alkylsilikat-Polymeren angegeben:
Tetraalkylsilikate: Tetraethyl(ortho)silikat; Tetra-n-propylsilikat; Tetrabutylglykolsilikat
Trialkylsilikate: Triethylsilikat; Trialkylsilikate (insbesondere Triethylsilikate) mit Arylfunktionalität am vierten Sauerstoffatom (Si-O-Ar; Ar = Arylrest)
Dialkylsilikate: Diethylsilikat; Dialkylsilikate mit Arylfunktionalität am dritten und/oder vierten Sauerstoffatom (Si-O-Ar)
Monoalkylsilikate: Monoethylsilikat; Monoalkylsilikate mit Arylfunktionalität am zweiten und/oder dritten und/oder vierten Sauerstoffatom (Si-O-Ar)
Substituierte Silikate:
   (a) Aryl- oder Alkyl-Alkoxy-Silane, d.h. Verbindungen des Typs R1n=1-3Si(OR2)m=4-n mit R1 = Alkyl- oder Arylrest und R2 = Alkyl-rest; z.B. Dimethyl-Dimethoxy-Silan (R1 = CH3; n = 2; R2 = CH3; m = 4-n = 2);
   (b) organofunktionelle Silane, d.h. Verbindungen des Typs R1n=1-3Si(OR2)m=4-n mit R1 funktionelle Gruppe wie 3-Aminopropyl oder 3-Ureidopropyl oder 3-Glycidyloxypropyl und R2 = Alkylrest; z.B. 3-Aminopropyl-triethoxysilan, 3-Ureidopropyl-triethoxysilan oder 3- Glycidyloxypropyl-trimethoxysilan

Ethylpolysilikate: Ethylester von Polykieselsäure oder Oligokieselsäuren, Gemische von Ethylestern von verschiedenen Polykieselsäuren oder Oligokieselsäuren, vorzugsweise mit einem SiO₂-Anteil von mehr als 35 Gew.-%, vorzugsweise mehr als 39 Gew.-%, besonders Bevorzugt in einem Bereich von 40 bis 42 Gew.-% (der SiO₂-Gehalt kann nach AN-SAA 0851 bestimmt werden).

Insbesondere Ethylester von Polykieselsäure oder Oligokieselsäuren und deren Gemische zeichnen sich durch einen hohen Flammpunkt aus. Lösungsmittel mit einem hohen Flammpunkt sind bevorzugt, da hierdurch die Arbeitssicherheit verbessert werden kann.

Neben oder alternativ zu den oben genannten unpolaren Lösungsmitteln können als Lösungsmittel auch Verbindungen verwendet werden, ausgewählt aus der Gruppe bestehend aus
- Fettsäurealkylester, vorzugsweise Fettsäuremethylester, bevorzugt Pflanzenölmethylester, bevorzugt Rapsölmethylester,
- Tallölester
- Alkylencarbonate, vorzugsweise Propylencarbonat,
- Cycloalkane
- cyclische Formale
   und
- C₂- bis C₆-Dicarbonsäuren beispielsweise 1,2-Ethandisäure (Oxalsäure, C2-Dicarbonsäure), 1,3-Propandisäure (Malonsäure,C3-Dicarbonsäure), 1,4-Butandisäure (Bernsteinsäure, C4-Dicarbonsäure), 1,5 Pentandisäure (Glutarsäure, C5 Dicarbonsäure) oder 1,6-Hexandisäure (Adipinsäure, C6-Dicarbonsäure), Dialkylester von C₄-C₆-Dicarbonsäuren sind besonders bevorzugt, insbesondere Dimethylester von C₄-C₆-Dicarbonsäuren, (solche Gemische sind dem Fachmann als sogenannte "dibasic ester" oder "DBE" bekannt).

Ebenfalls erfindungsgemäß bevorzugt ist eine Phenolharz-Komponente, wobei die Lösungsmittel in einer Menge im Bereich von 30 bis 70 Gew.-% vorliegt, vorzugsweise im Bereich von 40 bis 60 Gew.-% vorliegt, besonders bevorzugt im Bereich von 45 bis 55 Gew.-% vorliegt, bezogen auf die Gesamtmenge der Phenolharz-Komponente.

Aufgrund der guten Löslichkeit des erfindungsgemäßen Phenolharzes in unpolaren Lösungsmitteln zeigen die erfindungsgemäßen Phenolharz-Komponenten eine besonders gute Lagerstabilität. Auch bei Temperaturen zwischen -15 und 0 °C erfolgt keine Trübung der Lösung.

Erfindungsgemäß bevorzugt ist eine Phenolharz-Komponente, wobei die Phenol-harz-Komponente eine Viskosität bei 20 °C von weniger als 1000 mPa•s besitzt, vorzugsweise weniger als 500 mPa•s besitzt, ganz besonders bevorzugt weniger als 150 mPa•s besitzt.

Es hat sich in eigenen Untersuchungen gezeigt, dass bei erfindungsgemäßen Phenolharz-Komponenten eine besonders geringe Viskosität erhalten werden kann. Eine geringe Viskosität verbessert die Verarbeitbarkeit der Phenolharz-Komponenten und begünstigt die homogene Durchmischung bei der Herstellung einer Formstoffmischung.

Ein weiterer Aspekt der vorliegenden Erfindung betrifft ein Zweikomponenten-Bindemittelsystem zur Verwendung im Polyurethan-Cold-Box-Prozess, umfassend eine Phenolharz-Komponente und eine davon getrennte Isocyanat-Komponente (vorzugsweise Polyisocyanat-Komponente), wobei die Phenolharz-Komponente ein erfindungsgemäßes Phenolharz umfasst und/oder eine erfindungsgemäße Phenolharz-Komponente ist.

Ein weiterer Aspekt der vorliegenden Erfindung betrifft eine Formstoffmischung zur Härtung durch Kontaktieren mit einem tertiären Amin oder mit einer Mischung aus zwei oder mehreren tertiären Aminen, wobei die Formstoffmischung herstellbar ist durch Vermischen der Komponenten des erfindungsgemäßen Zweikomponenten-Bindemittelsystems.

Erfindungsgemäß bevorzugt wird zum Härten der Formstoffmischung im Polyurethan-Cold-Box-Prozess als Amin entweder Triethylamin, Dimethylethylamin, Diethylmethylamin, Dimethylisopropylamin, Dimethylpropylamin oder eine Mischung aus den vorgenannten Aminen eingesetzt.

Erfindungsgemäß bevorzugt ist eine Formstoffmischung, ferner umfassend einen Formgrundstoff oder eine Mischung mehrerer Formgrundstoffe, wobei das Verhältnis der Gesamtmasse an Formgrundstoffen zu der Gesamtmasse sonstiger Bestandteile der Formstoffmischung im Bereich von 100 : 10 bis 100 : 0,4, bevorzugt von 100 : 3 bis 100 : 0,5 und besonders bevorzugt von 100 : 1,5 bis 100 : 0,6 liegt.

Ein weiterer Aspekt der vorliegenden Erfindung betrifft die Verwendung eines erfindungsgemäßen Phenolharzes, einer erfindungsgemäßen Phenol-Harz-Komponente, eines erfindungsgemäßen Zweikomponenten-Bindemittelsystems oder einer erfindungsgemäßen Formstoffmischung zum Binden eines Formgrundstoffes oder einer Mischung von Formgrundstoffen im Polyurethan-Cold-Box- Prozess.

Ein weiterer Aspekt der vorliegenden Erfindung betrifft einen Artikel aus der Gruppe bestehend aus Speisern, Gießereiformen und Gießereikernen, herstellbar aus einer erfindungsgemäßen Formstoffmischung.

Überraschenderweise hat es sich gezeigt, dass durch die Verwendung von erfindungsgemäßen Artikeln, die beim Guss anfallenden Emission an Aromaten wie Benzol, Xylol oder Toluol reduziert oder vollständig vermieden werden kann, wenn die üblicherweise verwendeten aromatischen Lösungsmittel teilweise oder vollständig durch Alkylsilikate ersetzt werden.

Üblicherweise erhalten Artikel, wie Speiser, Gießereiformen und Gießereikerne, die aus Formstoffmischungen hergestellt werden, bereits während der Begasung eine messbare Festigkeit (diese wird als "Anfangsfestigkeit" oder "Sofortfestigkeit" bezeichnet), die sich nach Beendigung der Begasung langsam auf die Endfestigkeitswerte erhöht. In der Praxis werden möglichst hohe Anfangsfestigkeiten gewünscht, damit die Artikel möglichst sofort nach der Begasung dem Formwerkzeug entnommen werden können und das Werkzeug wieder für einen neuen Arbeitsgang zur Verfügung steht. Insbesondere bei der automatisierten Entnahme und Weiterverarbeitung der aus der Formstoffmischung hergestellten Artikel mittels eines Roboters hat es sich als vorteilhaft erwiesen, wenn die Artikel neben der Festigkeit auch eine hohe Elastizität aufweisen. Da die üblicherweise verwendeten Roboterarme keine ausreichend hohe Sensibilität aufweisen und daher nicht auf kleinste Abweichungen des hergestellten Artikels oder seiner Lage reagieren können, kommt es häufig vor, dass die hergestellten Artikel durch den Roboterarm zerbrochen werden, sofern der Artikel keine ausreichende Elastizität aufweist und damit die Ungenauigkeit des Roboters ausgleichen kann.

Überraschenderweise hat es sich gezeigt, dass die aus erfindungsgemäßen Formstoffmischungen hergestellten erfindungsgemäßen Artikel eine hohe Anfangsfestigkeit, auch "Sofortfestigkeit", bei gleichzeitiger hoher Elastizität (hoher Bruchweg) aufweisen. Hierdurch haben die aus erfindungsgemäßen Formstoffmischungen hergestellten erfindungsgemäßen Artikel einen entscheidenden Vorteil. Die die aus erfindungsgemäßen Formstoffmischungen hergestellten erfindungsgemäßen Artikel können automatisiert entnommen und weiterverarbeitet werden und der Ausschuss, der durch Zerbrechen der Artikel anfällt, kann signifikant reduziert werden.

Zur Herstellung des Artikels werden zunächst die Komponenten des Zweikomponenten-Bindemittelsystems mit einem (feuerfesten) Formgrundstoff zu einer Formstoffmischung vermischt. Soll die Herstellung des Formkörpers nach dem PU-No-Bake-Verfahren erfolgen, kann der Formstoffmischung auch bereits ein geeigneter Katalysator zugegeben werden.

Bevorzugt werden dazu flüssige Amine zur Formstoffmischung gegeben. Diese Amine weisen bevorzugt einen pK_{b}-Wert von 4 bis 11 auf. Beispiele geeigneter Katalysatoren sind 4-Alkylpyridine, wobei die Alkylgruppe 1 bis 4 Kohlenstoffatome umfasst, Isochinolin, Arylpyridine, wie Phenylpyridin, Pyridin, Acrylin, 2-Methoxypyridin, Pyridazin, Chinolin, n-Methylimidazol, 4,4'-Dipyridin, Phenylpropylpyridin, 1-Methylbenzimidazol, 1,4-Thiazin, N,N-Dimethylbenzylamin, Tribenzylamin, N,N-Dimethyl-1,3-Propandiamin, N,N-Dimethylethanolamin sowie Triethanolamin. Der Katalysator kann gegebenenfalls mit einem inerten Lösungsmittel verdünnt werden, beispielsweise 2,2,4-Trimethyl-1,3-pentandiol-diisobutyrat, oder einem Fettsäureester. Die Menge des zugegebenen Katalysators wird, bezogen auf das Gewicht der Polyolkomponente, im Bereich von 0,1 bis 15 Gew.-% gewählt.

Die Formstoffmischung wird dann mit üblichen Mitteln in eine Form eingebracht und dort verdichtet. Die Formstoffmischung wird anschließend zu einem Artikel ausgehärtet. Bei der Härtung sollte der Artikel bevorzugt seine äußere Form behalten.

Insbesondere bei der Herstellung von Gießereikernen ist es nötig, dass die Gießereikerne untereinander oder mit der Gießereiform verbunden werden. Dieses Verbinden erfolgt häufig mittels Metallstiften, die in die Kerne geschossen werden und diese miteinander Verbinden. Es hat sich überraschenderweise gezeigt, dass die aus erfindungsgemäßen Formstoffmischungen hergestellten erfindungsgemäßen Artikel aufgrund der erhöhten Elastizität bei der Weiterverarbeitung und insbesondere beim Verbinden mit Metallstiften weniger häufig brechen.

Ein weiterer Aspekt der vorliegenden Erfindung betrifft ein Verfahren zur Herstellung eines Phenolharzes, umfassend die folgenden Schritte:
(A) Bereitstellen oder Herstellen von Phenol,
(B) Bereitstellen oder Herstellen einer oder mehrerer Verbindung mit der allgemeinen Formel (I) 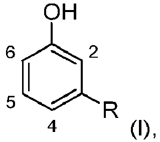 wobei der Substituent R ein (a2-i) substituierter oder unsubstituierter, (a2-ii) aliphatischer, (a2-iii) verzweigter oder unverzweigter, (a2-iv) gesättigter oder ungesättigter Rest mit insgesamt 1 bis 35 C-Atomen, einschließlich etwaiger Substituenten, ist,
(C) Bereitstellen oder Herstellen einer oder mehrerer Verbindung mit der allgemeinen Formel (II) 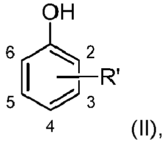 wobei der Substituent R' an der Position 2 oder 4 substituiert ist und ein (a3-i) substituierter oder unsubstituierter, (a3-ii) aliphatischer, (a3-iii) verzweigter oder unverzweigter, (a3-iv) gesättigter oder ungesättigter Rest mit insgesamt 1 bis 12 C-Atomen, einschließlich etwaiger Substituenten, ist,
(D) Bereitstellen oder Herstellen von Formaldehyd und
(E) Einkondensieren der in den Schritten (A) bis (D) bereitgestellten oder hergestellten Verbindungen.

Ein weiterer Aspekt der vorliegenden Erfindung betrifft ein Phenolharz hergestellt durch ein erfindungsgemäßes Verfahren zur Herstellung eines Phenolharzes.

Ein weiterer Aspekt der vorliegenden Erfindung betrifft Verfahren zur Herstellung eines Artikels aus der Gruppe bestehend aus Speisern, Gießereiformen und Gießereikernen mit den Schritten:
- Bereitstellen oder Herstellen eines Formgrundstoffs oder einer Mischung mehrerer Formgrundstoffe,
- Vermischen des Formgrundstoffs bzw. der Mischung mehrerer Formgrundstoffe mit der Phenolharz-Komponente und der Isocyanat-Komponente (bzw. Polyisocyanat-Komponente) eines erfindungsgemäßen Zweikomponenten-Bindemittelsystems, sodass eine zur Härtung durch Kontaktieren mit einem gasförmigen tertiären Amin oder mit einer Mischung aus zwei oder mehreren gasförmigen tertiären Aminen geeignete Formstoffmischung gebildet wird,
- Formen der Formstoffmischung,
- Kontaktieren der geformten Formstoffmischung mit einem gasförmigen tertiären Amin oder einer Mischung aus zwei oder mehreren gasförmigen tertiären Aminen gemäß dem Polyurethan-Cold-Box-Prozess, sodass die geformte Formstoffmischung gehärtet und so der Artikel aus der Gruppe bestehend aus Speisern, Gießereiformen und Gießereikernen gebildet wird.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Die Erfindung wird nachstehend anhand von Beispielen weiter erläutert.

### Beispiel 1: Darstellung eines erfindungsgemäßen Phenolharzes:

In einem Reaktionsgefäß, das mit Kühler, Thermometer und Rührer ausgerüstet war, wurden:
20 Gewichtsteile Phenol
15 Gewichtsteile ortho-Kresol
0,025 Gewichtsteile Zinkacetatdihydrat
0,015 Gewichtsteile Zinkstearat
vorgelegt. Der Kühler wurde auf Rückfluss gesetzt. Die Temperatur wurde innerhalb einer Stunde kontinuierlich ansteigend auf 110 °C gebracht und auf dieser Temperatur gehalten.

Über einen Zeitraum von 90 Minuten wurden 17 Gewichtsteile Paraformaldehyd (91 %ig) in 20 Portionen hinzugegeben.

Anschließend wird die Reaktionsmischung weiter gerührt und 3,0 Gewichtsteile Cardanol werden hinzugegeben. Die Reaktionsmischung wird für weitere 30 Minuten auf 110 °C erhitzt.

Anschließend wurde der Kühler auf atmosphärische Destillation umgestellt und die Temperatur innerhalb von einer Stunde auf 125 -126 °C erhöht, sodass die flüchtige Bestandteile aus der Produktlösung abdestilliert wurden.

Danach erfolgte eine Vakuumdestillation, bei der die restlichen flüchtigen Bestandteile entfernt wurden.

Man erhält das erfindungsgemäße Phenolharz in einer Ausbeute von ca. 80 %.

### Beispiel 2: Darstellung eines nicht erfindungsgemäßen Phenolharzes:

In einem Reaktionsgefäß, das mit Kühler, Thermometer und Rührer ausgerüstet war, wurden:
20 Gewichtsteile Phenol
15 Gewichtsteile ortho-Kresol
0,025 Gewichtsteile Zinkacetatdihydrat
0,015 Gewichtsteile Zinkstearat
vorgelegt. Der Kühler wurde auf Rückfluss gesetzt. Die Temperatur wurde innerhalb einer Stunde kontinuierlich ansteigend auf 110 °C gebracht und auf dieser Temperatur gehalten.

Über einen Zeitraum von 90 Minuten wurden 17 Gewichtsteile Paraformaldehyd (91 %ig) in 20 Portionen hinzugegeben.

Anschließend wird die Reaktionsmischung für weitere 30 Minuten auf 110 °C erhitzt.

Anschließend wurde der Kühler auf atmosphärische Destillation umgestellt und die Temperatur innerhalb von einer Stunde auf 125 -126 °C erhöht, sodass die flüchtige Bestandteile aus der Produktlösung abdestilliert wurden.

Danach erfolgte eine Vakuumdestillation, bei der die restlichen flüchtigen Bestandteile entfernt wurden.

Man erhält ein Phenol/o-Kresolharz in einer Ausbeute von ca. 80 %.

### Beispiel 3: Darstellung eines nicht erfindungsgemäßen Phenolharzes:

In einem Reaktionsgefäß, das mit Kühler, Thermometer und Rührer ausgerüstet war, wurden:
33 Gewichtsteile Phenol
0,025 Gewichtsteile Zinkacetatdihydrat
0,015 Gewichtsteile Zinkstearat
vorgelegt. Der Kühler wurde auf Rückfluss gesetzt. Die Temperatur wurde innerhalb einer Stunde kontinuierlich ansteigend auf 110 °C gebracht und auf dieser Temperatur gehalten.

Über einen Zeitraum von 90 Minuten wurden 17 Gewichtsteile Paraformaldehyd (91 %ig) in 20 Portionen hinzugegeben.

Anschließend wird die Reaktionsmischung für weitere 30 Minuten auf 110 °C erhitzt.

Anschließend wurde der Kühler auf atmosphärische Destillation umgestellt und die Temperatur innerhalb von einer Stunde auf 125 -126 °C erhöht, sodass die flüchtige Bestandteile aus der Produktlösung abdestilliert wurden.

Danach erfolgte eine Vakuumdestillation, bei der die restlichen flüchtigen Bestandteile entfernt wurden.

Man erhält ein Phenolharz in einer Ausbeute von ca. 80 %.

### Beispiel 4: Bestimmung der Mischbarkeit der in den Beispielen 1 bis 3 hergestellten Harze mit Tetraethylsilikat:

100g des zu testenden Harzes wurden in einem Becherglas vorgelegt und Tetraethylsilikat wurde in Portionen zugegeben, bis eine Eintrübung der resultierenden Harzlösung bei 25 °C festzustellen war. Dabei wurde darauf geachtet, dass nach jeder Zugabe einer Portion Tetraethylsilikat ausreichend lange gerührt wurde, um eine homogene Lösung herzustellen.

Nach Zugabe der ersten Portionen Tetraethylsilikat wurde die resultierende Mischung bis auf 60 °C erwärmt und vor der nachfolgenden Zugabe wieder auf 25 °C abgekühlt. Die Zugabe von Portionen des Tetraethylsilikats wurde mehrfach wiederholt, bis eine Eintrübung des Harzes zu beobachten war, die auch durch ausreichend langes (>90 Minuten) Rühren der Lösung bei 25 °C nicht beseitigt werden konnte.

Die Messung wurde drei mal wiederholt und der Mittelwert gebildet.

Die Ergebnisse sind in der nachfolgenden Tabelle 1 angegeben:

| Harz | Maximale Mischbarkeit: 100g Phenolharz mit maximal x g Tetraethylsilikat (TEOS) * bei 25 °C |
|---|---|
| Aus Beispiel 1 | 150 g TEOS / 100g Phenolharz |
| Aus Beispiel 2 | 100 g TEOS / 100g Phenolharz |
| Aus Beispiel 3 | 66 g TEOS / 100g Phenolharz |

| | |
|---|---|
| *Die Grenze der Mischbarkeit gilt als erreicht, wenn sich die Mischung eintrübt. | |

Aus den Ergebnissen kann entnommen werden, dass das erfindungsgemäße Phenolharz aus Beispiel 1 eine höhere Mischbarkeit mit Tetraethylsilikat aufweist, als die nicht erfindungsgemäßen Phenolharze aus den Beispielen 2 und 3.

### Beispiel 5: Bestimmung der Bruchkraft, des Bruchweqes und der Soforfestigkeit:

Die in den Beispielen 1 bzw. 2 hergestellten Phenolharze wurden 1:1 mit einem Gemisch aus 13 Gewichtsteilen DBE und 37 Gewichtsteilen Tetraetylsilikat vermischt. Die Resultierende Phenolharz-Komponente wurde zur Herstellung von Prüfkörpern verwendet.

Unter Verwendung der hergestellten Phenolharz-Komponente, von Formgrundstoffen und einer Polyisocyanat-Komponente wurde eine Formstoffmischung hergestellt. Wie unten beschrieben werden im Cold-Box-Prozess Prüfköper in Form von Biegestäben hergestellt und deren Anfangs-Biegefestigkeiten bestimmt.

Die Isocyanat Komponente wird durch Mischen von 80 Teilen Diphenylmethandiisocyanat (zum Beispiel Lupranat M20S, BASF), 19 Teile Tetraethylsilikat und 1 Teil Additiv nach Patent DE 102012201971 hergestellt.

Die Herstellung der Prüfkörper (+GF+ Biegefestigkeits-Normprüfkörper) wird in Anlehnung an VDG Merkblatt P73 durchgeführt. Dazu wird der Formgrundstoff in einem Mischbehälter vorgelegt. Die Phenolharz-Komponente und Polyisocyanat-Komponente werden dann in dem Mischbehälter so eingewogen, dass sie sich nicht direkt vermischen. Anschließend werden Formgrundstoff, die hergestellte Phenolharz-Komponente und Polyisocyanat-Komponente in einem Paddelmischer (Fa. Multiserw, Modell RN10/P) für 2 Minuten bei ca. 220 Umdrehungen / Minute zu einer Formstoffmischung gemischt.

Die Herstellung der Prüfkörper erfolgt mit einer Universal-Kernschießmaschine LUT, welche mit einem Gasomat LUT/G, beides von der Firma Multiserw, ausgestattet ist. Die fertige Formstoffmischung wird direkt nach ihrer oben beschriebenen Herstellung in den Schießkopf der Kernschießmaschine gefüllt.

Die Parameter des Kernschieß-Prozesses sind wie folgt: Schusszeit: 3 Sekunden, Verzögerungszeit nach dem Schuss: 5 Sekunden, Schießdruck: 4 bar (400 kPa). Zur Härtung werden die Prüfkörper 10 Sekunden lang bei einem Begasungsdruck von 2 bar (200 kPa) mit Dimethylpropylamin (DMPA) begast. Anschließend wird 9 Sekunden lang und bei einem Spüldruck von 4 bar (400 kPa) mit Luft gespült und der Bruchweg, die Bruchkraft und die Sofortfestigkeit der hergestellten Prüfkörper wurde bestimmt.

Die Messung der Sofortfestigkeit erfolgt mit einem Multiserw-Prüfgerät LRu-2e zu bestimmten Zeitpunkten (15 Sekunden, 1 Stunde, 24 Stunden, siehe Tabelle 2) nach Ende der Spülung.

Die Messung der Bruchkraft und des Bruchweges erfolgt mit einem Multiserw-Prüfgerät LRu-DMA zu bestimmten Zeitpunkten (15 Sekunden, 1 Stunde, 24 Stunden, siehe Tabelle 2) nach Ende der Spülung.

Die Ergebnisse der Messungen sind in der nachfolgenden Tabelle, Tabelle 2, wiedergegeben.

**Tabelle 2:**

| **Bruchkraft [N]** | **15 s (sofort)** | **1 h** | **24 h** |
|---|---|---|---|
| Phenolharz aus Beispiel 1 | 102 | 161 | 183 |
| Phenolharz aus Beispiel 2 | 119 | 162 | 187 |

| **Bruchweg [mm]** | **15 s (sofort)** | **1 h** | **24 h** |
|---|---|---|---|
| Phenolharz aus Beispiel 1 | 0,87 | 0,48 | 0,55 |
| Phenolharz aus Beispiel 2 | 0,62 | 0,46 | 0,53 |

| **Sofortfestigkeit [N/cm²]** | **15s (sofort)** | **1 h** | **24 h** |
|---|---|---|---|
| Phenolharz aus Beispiel 1 | 268 | 381 | 390 |
| Phenolharz aus Beispiel 2 | 307 | 386 | 426 |

### Weitere Ausführungsbeispiele

Weitere Ausführungsbeispiele der vorliegenden Erfindung betreffen:
1. Phenolharz zur Verwendung in der Phenolharzkomponente eines Zweikomponenten-Bindemittelsystems für den Polyurethan-Cold-Box-Prozess, wobei das Phenolharz umfasst:
   (a) ein Resol mit den folgenden strukturellen Einheiten: 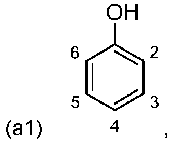 wobei an einer, zwei oder drei der Positionen 2, 4 und 6 anstatt einer Bindung zu Wasserstoff eine Bindung an eine weitere strukturelle Einheit des Resols vorliegt,
   (a2) eine oder mehrere strukturelle Einheiten der Formel (A2) 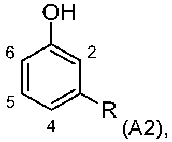 wobei der Substituent R ein (a2-i) substituierter oder unsubstituierter, (a2-ii) aliphatischer, (a2-iii) verzweigter oder unverzweigter, (a2-iv) gesättigter oder ungesättigter Rest mit insgesamt 1 bis 35 C-Atomen, einschließlich etwaiger Substituenten, ist und
      wobei an einer, zwei oder drei der Positionen 2, 4 und 6 anstatt einer Bindung zu Wasserstoff eine Bindung an eine weitere strukturelle Einheit des Resols vorliegt,
   (a3) eine oder mehrere strukturelle Einheiten der Formel (A3) 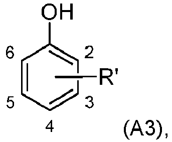 wobei der Substituent R' an der Position 2 oder 4 substituiert ist und ein (a3-i) substituierter oder unsubstituierter, (a3-ii) aliphatischer, (a3-iii) verzweigter oder unverzweigter, (a3-iv) gesättigter oder ungesättigter Rest mit insgesamt 1 bis 15 C-Atomen, einschließlich etwaiger Substituenten, ist und
      wobei an einer, zwei oder drei der verbleibenden Positionen 2, 4 und 6 anstatt einer Bindung zu Wasserstoff eine Bindung an eine weitere strukturelle Einheit des Resols vorliegt, 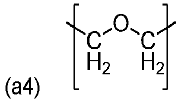 als zwei Phenolkerne verbindendes Glied, 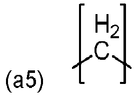 als zwei Phenolkerne verbindendes Glied.
2. Phenolharz nach Beispiel 1, wobei in der einen oder zumindest in einer der strukturellen Einheiten der Formel (A2) der Substituent R ein (a2-i) unsubstituierter, (a2-ii) aliphatischer, (a2-iii) unverzweigter Rest mit insgesamt 1 bis 35 C-Atomen ist, vorzugsweise mit insgesamt 5 bis 15 C-Atomen.
3. Phenolharz nach Beispiel 1 oder 2, wobei in der einen oder zumindest in einer der strukturellen Einheiten der Formel (A2) der Substituent R (a2-iv) ein- oder mehrfach ungesättigt ist, bevorzugt ein-, zwei- oder dreifach ungesättigt.
4. Phenolharz nach einem der vorherigen Beispiele, wobei in der einen oder zumindest in einer der strukturellen Einheiten der Formel (A2) der Substituent R ein (a2-i) unsubstituierter, (a2-ii) aliphatischer, (a2-iii) unverzweigter Rest mit insgesamt 15 C-Atomen ist, der (a2-iv) dreifach ungesättigt ist, wobei Doppelbindungen vorzugsweise in den Positionen 8, 11 und 14 angeordnet sind.
5. Phenolharz nach einem der vorherigen Beispiele, wobei die strukturellen Einheiten der Formel (A2) eine oder mehrere strukturelle Einheiten der Formel (A2-A) ist: 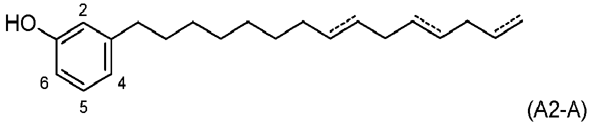 wobei eine, zwei, oder sämtliche der gestrichelt dargestellten Bindungen eine Doppelbindung darstellt, wobei an einer, zwei oder drei der Positionen 2, 4 und 6 anstatt einer Bindung zu Wasserstoff eine Bindung an eine weitere strukturelle Einheit des Resols vorliegt.
6. Phenolharz nach einem der vorangehenden Beispiele, wobei in der einen oder zumindest in einer der strukturellen Einheiten der Formel (A3) der Substituent R' in ortho-Position zum phenolischen OH angeordnet ist.
7. Phenolharz nach einem der vorherigen Beispiele, wobei in der einen oder zumindest in einer der strukturellen Einheiten der Formel (A3) der Substituent R' ein (a3-i) unsubstituierter, (a3-iii) verzweigter oder unverzweigter, (a3-iv) gesättigter Alkylrest ist, mit vorzugsweise 1 bis 9 C-Atomen, bevorzugt mit 1, 4, 8 oder 9 C-Atomen.
8. Phenolharz nach einem der vorherigen Beispiele, wobei in dem Resol des Bestandteils (a) das molare Verhältnis der strukturellen Einheiten a1 zu a2 im Bereich von 10 : 1 bis 99 : 1, bevorzugt von 15 : 1 bis 50 : 1, liegt.
9. Phenolharz nach einem der vorherigen Beispiele, wobei in dem Resol des Bestandteils (a) das molare Verhältnis der strukturellen Einheiten a1 zu a3 im Bereich von 1 : 1 bis 10 : 1 liegt, vorzugsweise im Bereich 1,5 : 1 bis 3,5 : 1 liegt.
10. Phenolharz nach einem der vorherigen Beispiele, wobei in dem Resol des Bestandteils (a) das molare Verhältnis der strukturellen Einheiten a2 zu a3 im Bereich von 5 : 1 bis 30 : 1, vorzugsweise von 10:1 bis 20:1 liegt.
11. Phenolharz nach einem der vorherigen Beispiele, wobei in dem Resol des Bestandteils (a) das molare Verhältnis der strukturellen Einheiten a4 zu a5 im Bereich von 90 : 10 bis 10 : 90 liegt.
12. Phenolharz nach einem der vorherigen Beispiele, wobei die strukturellen Einheiten der Formel (A2) eine oder mehrere strukturelle Einheiten der Formel (A2-A) ist: 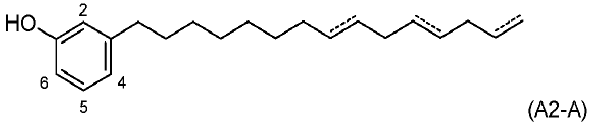 wobei eine, zwei, oder sämtliche der gestrichelt dargestellten Bindungen eine Doppelbindung darstellt
   und wobei
   in der einen oder zumindest in einer der strukturellen Einheiten der Formel (A3) der Substituent R' in ortho-Position zum phenolischen OH angeordnet ist und der Substituent R' eine Methyl-Gruppe darstellt.
13. Phenolharz-Komponente zur Verwendung als Komponente eines Zweikomponenten-Bindemittelsystems für den Polyurethan-Cold-Box-Prozess, umfassend
   - ein Phenolharz nach einem der Beispiele 1 bis 12
      sowie
   - ein Lösungsmittel für das Phenolharz.
14. Zweikomponenten-Bindemittelsystem zur Verwendung im Polyurethan-Cold-Box-Prozess, umfassend eine Phenolharz-Komponente und eine davon getrennte Isocyanat-Komponente, wobei die Phenolharz-Komponente ein Phenolharz nach einem der Beispiele 1 bis 12 umfasst und/oder eine Phenolharz-Komponente nach Beispiel 13 ist.
15. Mischung zur Härtung durch Kontaktieren mit einem tertiären Amin oder mit einer Mischung aus zwei oder mehreren tertiären Aminen, wobei die Mischung herstellbar ist durch Vermischen der Komponenten des Zweikomponenten-Bindemittelsystems nach Beispiel 14.
16. Verwendung eines Phenolharzes nach einem der Beispiele 1 bis 12, einer Phenolharz-Komponente nach Beispiel 13, eines Zweikomponenten-Bindemittelsystems nach Beispiel 14 oder einer Mischung nach Beispiel 15 zum Binden eines Formgrundstoffes oder einer Mischung von Formgrundstoffen im Polyurethan-Cold-Box-Prozess.
17. Artikel aus der Gruppe bestehend aus Speisern, Gießereiformen und Gießereikernen, herstellbar aus einer Mischung nach Beispiel 15.
18. Verfahren zur Herstellung eines Phenolharzes, umfassend die folgenden Schritte:
   (A) Bereitstellen oder Herstellen von Phenol,
   (B) Bereitstellen oder Herstellen einer oder mehrerer Verbindung mit der allgemeinen Formel (I) 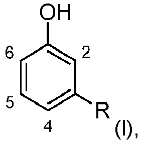 wobei der Substituent R ein (a2-i) substituierter oder unsubstituierter, (a2-ii) aliphatischer, (a2-iii) verzweigter oder unverzweigter, (a2-iv) gesättigter oder ungesättigter Rest mit insgesamt 1 bis 35 C-Atomen, einschließlich etwaiger Substituenten, ist,
   (C) Bereitstellen oder Herstellen einer oder mehrerer Verbindung mit der allgemeinen Formel (II) 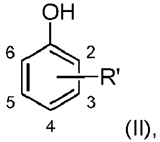 wobei der Substituent R' an der Position 2 oder 4 substituiert ist und ein (a3-i) substituierter oder unsubstituierter, (a3-ii) aliphatischer, (a3-iii) verzweigter oder unverzweigter, (a3-iv) gesättigter oder ungesättigter Rest mit insgesamt 1 bis 12 C-Atomen, einschließlich etwaiger Substituenten, ist,
   (D) Bereitstellen oder Herstellen von Formaldehyd und
   (E) Einkondensieren der in den Schritten (A) bis (D) bereitgestellten oder hergestellten Verbindungen.

## Patentansprüche

1. Phenolharz zur Verwendung in der Phenolharzkomponente eines Zweikomponenten-Bindemittelsystems für den Polyurethan-Cold-Box-Prozess, wobei das Phenolharz umfasst:
(a) ein Resol mit den folgenden strukturellen Einheiten: 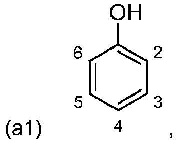 wobei an einer, zwei oder drei der Positionen 2, 4 und 6 anstatt einer Bindung zu Wasserstoff eine Bindung an eine weitere strukturelle Einheit des Resols vorliegt,
(a2) eine oder mehrere strukturelle Einheiten der Formel (A2) 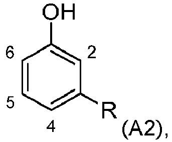 wobei der Substituent R ein (a2-i) substituierter oder unsubstituierter, (a2-ii) aliphatischer, (a2-iii) verzweigter oder unverzweigter, (a2-iv) gesättigter oder ungesättigter Rest mit insgesamt 1 bis 35 C-Atomen, einschließlich etwaiger Substituenten, ist und
wobei an einer, zwei oder drei der Positionen 2, 4 und 6 anstatt einer Bindung zu Wasserstoff eine Bindung an eine weitere strukturelle Einheit des Resols vorliegt,
(a3) eine oder mehrere strukturelle Einheiten der Formel (A3) 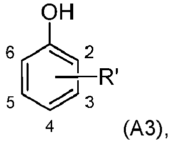 wobei der Substituent R' an der Position 2 oder 4 substituiert ist und ein (a3-i) substituierter oder unsubstituierter, (a3-ii) aliphatischer, (a3-iii) verzweigter oder unverzweigter, (a3-iv) gesättigter oder ungesättigter Rest mit insgesamt 1 bis 15 C-Atomen, einschließlich etwaiger Substituenten, ist und
wobei an einer, zwei oder drei der verbleibenden Positionen 2, 4 und 6 anstatt einer Bindung zu Wasserstoff eine Bindung an eine weitere strukturelle Einheit des Resols vorliegt, 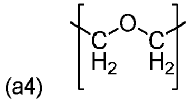 als zwei Phenolkerne verbindendes Glied, 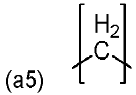 als zwei Phenolkerne verbindendes Glied.

2. Phenolharz nach Anspruch 1, wobei in der einen oder zumindest in einer der strukturellen Einheiten der Formel (A2) der Substituent R ein (a2-i) unsubstituierter, (a2-ii) aliphatischer, (a2-iii) unverzweigter Rest mit insgesamt 1 bis 35 C-Atomen ist, vorzugsweise mit insgesamt 5 bis 15 C-Atomen.

3. Phenolharz nach Anspruch 1 oder 2, wobei in der einen oder zumindest in einer der strukturellen Einheiten der Formel (A2) der Substituent R (a2-iv) ein- oder mehrfach ungesättigt ist, bevorzugt ein-, zwei- oder dreifach ungesättigt.

4. Phenolharz nach einem der vorherigen Ansprüche, wobei in der einen oder zumindest in einer der strukturellen Einheiten der Formel (A2) der Substituent R ein (a2-i) unsubstituierter, (a2-ii) aliphatischer, (a2-iii) unverzweigter Rest mit insgesamt 15 C-Atomen ist, der (a2-iv) dreifach ungesättigt ist, wobei Doppelbindungen vorzugsweise in den Positionen 8, 11 und 14 angeordnet sind.

5. Phenolharz nach einem der vorherigen Ansprüche, wobei die strukturellen Einheiten der Formel (A2) eine oder mehrere strukturelle Einheiten der Formel (A2-A) ist: 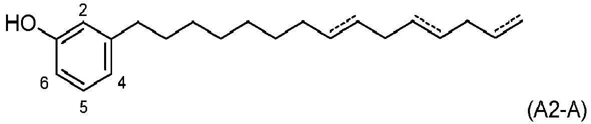 wobei eine, zwei, oder sämtliche der gestrichelt dargestellten Bindungen eine Doppelbindung darstellt, wobei an einer, zwei oder drei der Positionen 2, 4 und 6 anstatt einer Bindung zu Wasserstoff eine Bindung an eine weitere strukturelle Einheit des Resols vorliegt.

6. Phenolharz nach einem der vorangehenden Ansprüche, wobei in der einen oder zumindest in einer der strukturellen Einheiten der Formel (A3) der Substituent R' in ortho-Position zum phenolischen OH angeordnet ist.

7. Phenolharz nach einem der vorherigen Ansprüche, wobei in der einen oder zumindest in einer der strukturellen Einheiten der Formel (A3) der Substituent R' ein (a3-i) unsubstituierter, (a3-iii) verzweigter oder unverzweigter, (a3-iv) gesättigter Alkylrest ist, mit vorzugsweise 1 bis 9 C-Atomen, bevorzugt mit 1, 4, 8 oder 9 C-Atomen.

8. Phenolharz nach einem der vorherigen Ansprüche, wobei in dem Resol des Bestandteils (a)
das molare Verhältnis der strukturellen Einheiten a1 zu a2 im Bereich von 10 : 1 bis 99 : 1, bevorzugt von 15 : 1 bis 50 : 1, liegt
und/oder
das molare Verhältnis der strukturellen Einheiten a1 zu a3 im Bereich von 1 : 1 bis 10 : 1 liegt, vorzugsweise im Bereich 1,5 : 1 bis 3,5 : 1 liegt
und/oder
das molare Verhältnis der strukturellen Einheiten a2 zu a3 im Bereich von 5 : 1 bis 30 : 1, vorzugsweise von 10:1 bis 20:1 liegt
und/oder
das molare Verhältnis der strukturellen Einheiten a4 zu a5 im Bereich von 90 : 10 bis 10 : 90 liegt.

9. Phenolharz nach einem der vorherigen Ansprüche, wobei die strukturellen Einheiten der Formel (A2) eine oder mehrere strukturelle Einheiten der Formel (A2-A) ist: 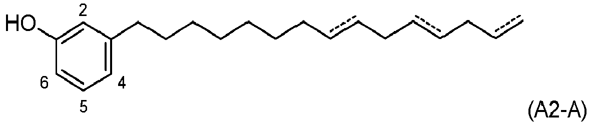 wobei eine, zwei, oder sämtliche der gestrichelt dargestellten Bindungen eine Doppelbindung darstellt
und wobei
in der einen oder zumindest in einer der strukturellen Einheiten der Formel (A3) der Substituent R' in ortho-Position zum phenolischen OH angeordnet ist und der Substituent R' eine Methyl-Gruppe darstellt.

10. Phenolharz-Komponente zur Verwendung als Komponente eines Zweikomponenten-Bindemittelsystems für den Polyurethan-Cold-Box-Prozess, umfassend
- ein Phenolharz nach einem der Ansprüche 1 bis 9
sowie
- ein Lösungsmittel für das Phenolharz.

11. Zweikomponenten-Bindemittelsystem zur Verwendung im Polyurethan-Cold-Box-Prozess, umfassend eine Phenolharz-Komponente und eine davon getrennte Isocyanat-Komponente, wobei die Phenolharz-Komponente ein Phenolharz nach einem der Ansprüche 1 bis 9 umfasst und/oder eine Phenolharz-Komponente nach Anspruch 10 ist.

12. Mischung zur Härtung durch Kontaktieren mit einem tertiären Amin oder mit einer Mischung aus zwei oder mehreren tertiären Aminen, wobei die Mischung herstellbar ist durch Vermischen der Komponenten des Zweikomponenten-Bindemittelsystems nach Anspruch 11.

13. Verwendung eines Phenolharzes nach einem der Ansprüche 1 bis 9, einer Phenolharz-Komponente nach Anspruch 10, eines Zweikomponenten-Bindemittelsystems nach Anspruch 11 oder einer Mischung nach Anspruch 12 zum Binden eines Formgrundstoffes oder einer Mischung von Formgrundstoffen im Polyurethan-Cold-Box-Prozess.

14. Artikel aus der Gruppe bestehend aus Speisern, Gießereiformen und Gießereikernen, herstellbar aus einer Mischung nach Anspruch 12.

15. Verfahren zur Herstellung eines Phenolharzes, umfassend die folgenden Schritte:
(A) Bereitstellen oder Herstellen von Phenol,
(B) Bereitstellen oder Herstellen einer oder mehrerer Verbindungen mit der allgemeinen Formel (I) 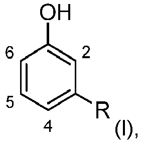 wobei der Substituent R ein (a2-i) substituierter oder unsubstituierter, (a2-ii) aliphatischer, (a2-iii) verzweigter oder unverzweigter, (a2-iv) gesättigter oder ungesättigter Rest mit insgesamt 1 bis 35 C-Atomen, einschließlich etwaiger Substituenten, ist,
(C) Bereitstellen oder Herstellen einer oder mehrerer Verbindungen mit der allgemeinen Formel (II) 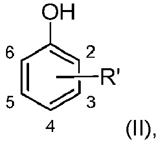 wobei der Substituent R' an der Position 2 oder 4 substituiert ist und ein (a3-i) substituierter oder unsubstituierter, (a3-ii) aliphatischer, (a3-iii) verzweigter oder unverzweigter, (a3-iv) gesättigter oder ungesättigter Rest mit insgesamt 1 bis 12 C-Atomen, einschließlich etwaiger Substituenten, ist,
(D) Bereitstellen oder Herstellen von Formaldehyd und
(E) Einkondensieren der in den Schritten (A) bis (D) bereitgestellten oder hergestellten Verbindungen.
